# EUROPEAN PATENT APPLICATION

(11) **EP 0 568 329 A1**
(43) Date of publication of application: **03.11.1993**
(21) Application number: 93303302.9
(22) Date of filing: 28.04.1993
(51) Int. Cl.: G06F 13/40, G06F 12/02

(54) **Peripheral memory buffer apparatus and method of using same**

(30) Priority: 01.05.1992 US 877553
(71) Applicant: ADVANCED MICRO DEVICES, INC., Sunnyvale, CA 94088 (US)
(72) Inventor: Runaldue, Thomas J., San Jose, California 95117 (US); Ngai, Philip, Belmont, California 94002 (US)
(74) Representative: Wright, Hugh Ronald

(57) **Abstract**

Methods and apparatus for using 8 bit wide buffer memory on an 8 bit wide local bus for high speed read interfacing with a 16 bit ISA bus which provides high speed sequential transfer with ISA bus specification for minimum access time by employing a prefetch and by providing said prefetched data to said bus if the next memory address matches the predicted memory address.

## Description

This invention relates to computer system bus architecture and in particular to 8 bit local bus architecture for peripherals accessing 16 bit ISA buses.

The term "peripheral" has come to mean a subsystem or system which is connected to the buses of a host computer system. Such peripherals include devices such as a printer or local area network (LAN) controller such as Ethernet. Usually peripheral systems are not under strict timing control of the same master clock as the host computer and as a result of this non-synchronous relationship, the peripherals frequently require a local memory capability called a buffer which permits the temporary storage of data received by the peripheral or to be sent by the peripheral until the host is prepared to send/receive data on its buses.

Most personal computer systems in the United States generally employ the so called "ISA" bus architecture. The ISA bus has a memory address space capable of direct addressing of up to 16 Megabytes. The ISA bus supports both 16 bit and 8 bit bus transfers but has a restriction that all memory devices within a partitioned 128k byte blocks are required to employ the same data bus byte width, i.e. either 8 bit or 16 bit. This restriction arises from the fact that the ISA bus uses the high order address bits 23-17 to decode whether a 16 bit or 8 bit segment is being addressed. Accordingly, the address is not available from the lower 17 bits of the bus.

For speed of data transfer, 16 bit wide data transfers are preferred. Most frequently, this requires peripherals to respond as 16 bit wide devices since the 128 K memory blocks are usually allocated to 16 bit transfers.

These influences have contributed to greater cost for peripheral buffer memory than if the 128K blocks had been designated for 8 bit transfers since most components of semiconductor memory are organized in 8 bit wide-bytes. Accordingly, it would generally be less expensive in hardware to provide a single 32K x 8 buffer memory device than a pair of 16K x 8 bit devices. However, two 16K x 8 bit devices can be connected in parallel to support 16 bit transfers whilethe 32K x 8 bit device will only support an 8 bit transfer. Accordingly, no effort to use a single integrated circuit memory chip for buffer memory has been undertaken in the past because 16 bit transfers were generally required.

We will describe an arrangement which lowers the cost of the hardware for peripheral device buffer memory without the penalty of reduced data transfer speed.

We will describe the use of a single 8 bit wide buffer memory chip but to manage the memory so that 16 bit memory transfers are supported.

We will describe a network controller employing an 8 bit wide buffer memory chip and a prefetch step for sequential read commands so that the speed for sequential transfers is faster with the 8 bit wide memory than for standard 16 bit transfers.

### BRIEF DESCRIPTION OF THE DRAWINGS

Figure 1 is a block diagram of a prior art buffer memory architecture for a peripheral.

Figure 2 is a block diagram of prior art architecture for data and address bus control for peripheral buffer memory.

Figure 3 is timing diagram for prior art 16 bit data transfer for peripheral buffer memory.

Figure 4 is a block diagram of an embodiment of our inventive 8 bit local bus memory buffer architecture interfacing to a 16 bit data bus.

Figure 5a is block diagram for data and address bus architecture for the invention.

Figure 5b is a diagram of the outputs Peripheral Control Logic circuit.

Figure 6 is a timing diagram for inventive 8-16 bit sequential read with a prefetch.

Figure 7 is timing diagram for inventive 8 bit-16 bit non-sequential read with prefetch.

Figure 8 is a timing diagram for an 8 bit local data bus write cycle.

### DETAILED DESCRIPTION OF THE INVENTION

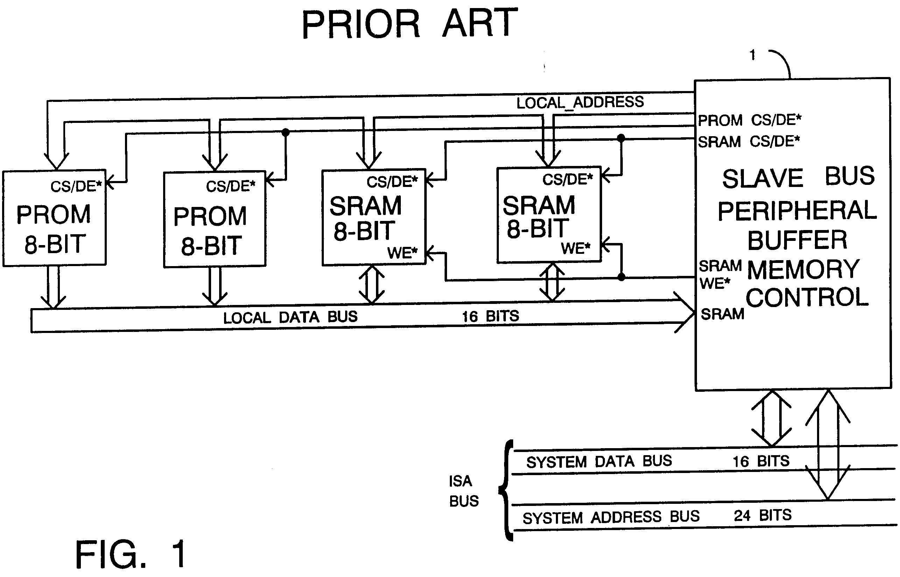

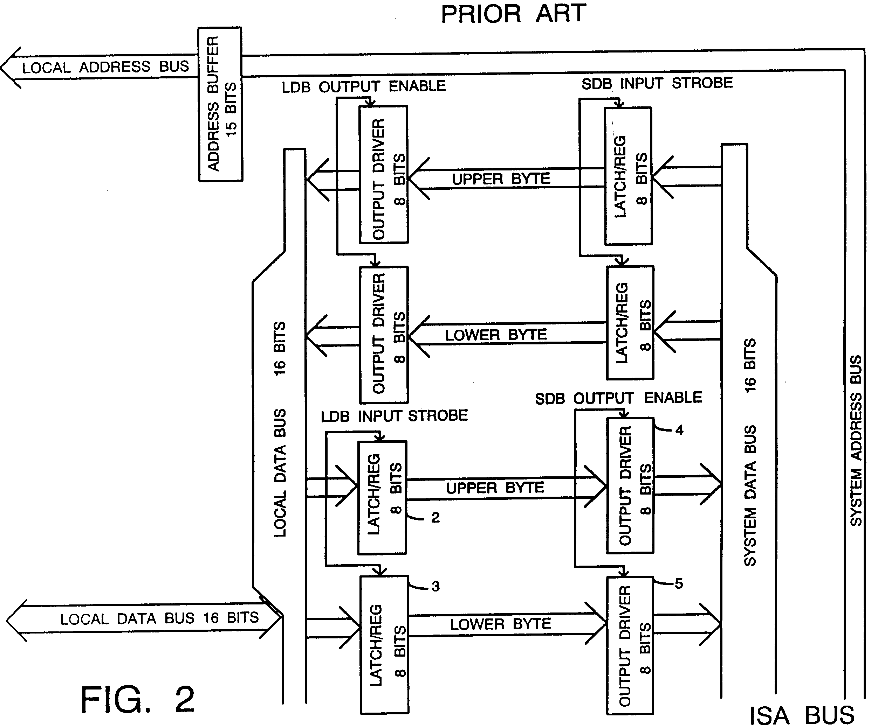

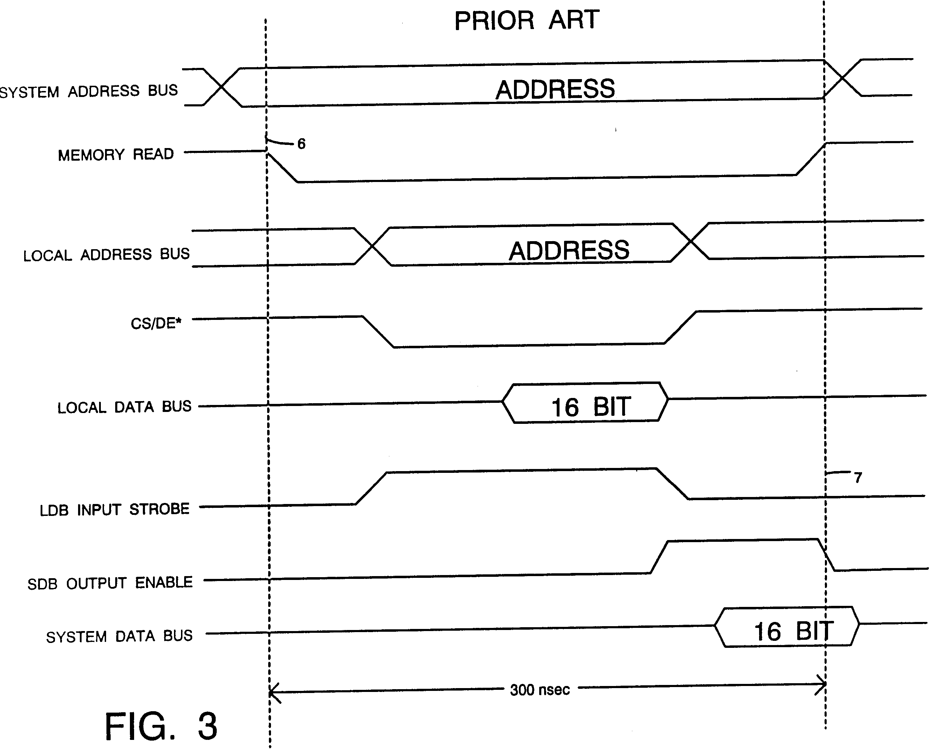

A prior art peripheral 16 bit buffer memory control is described with reference to Figures 1, 2 and 3. In this situation, static random access memory (SRAM) provides a buffer for the peripheral. Because the architecture is for access to an ISA bus, the local memory management is a 16 bit bus and the SRAM has been configured as two parallel 8 bit chips. Because the prior art dictated that the local bus was 16 bits wide, the peripheral control Read Only Memory (ROM) were also constrained to be provided in two chips in order to communicate in the 16 bit mode. The system address bus was decoded in the peripheral logic 1, which then selected the chip, in the case of buffer access, issuing the chip select, SRAM CS/OE. With reference to Figure 2, for a read, the local address bus was derived by stripping off the number of address bits from the system address bus to access the amount of local buffer memory. The local data bus was also 16 bits wide. Where 64 K bytes are provided in SRAM, the address bus of 15 bits is adequate. The peripheral 1 logic would send a strobe "LDB Input strobe" to simultaneously latch the SRAM data on the 16 bit local data bus into a pair of 8 bit latches, 2 and 3. Upon the issuance of the System Data Bus (SDB) output enable from the peripheral logic, the fetched 16 bit wide data would be simultaneously made available to the system 16 bit data bus via output drivers 4 and 5. The time between the negative going transition of Memory Read 6, (Fig. 3), to the negative transition of the SDB output enable, 7, (Fig. 3) is approximately 300 nanoseconds (ns). (This 16 bit read requires the issuance of at least one wait state to be issued from the peripheral according to the ISA bus requirements. The ISA wait state specification requires that a peripheral issues at least one wait state if its response will take longer than 173 ns after receive of request. Each wait state increases the cycle time by 125 ns).

The inventors have studied the demands for buffering of network controllers and have determined that the overwhelming number of data fetches into/out of the buffer are sequential. With these facts in view, the inventors have been able to substantially reduce the hardware cost of the memory management for a peripheral while at the same time reducing the overall transfer time.

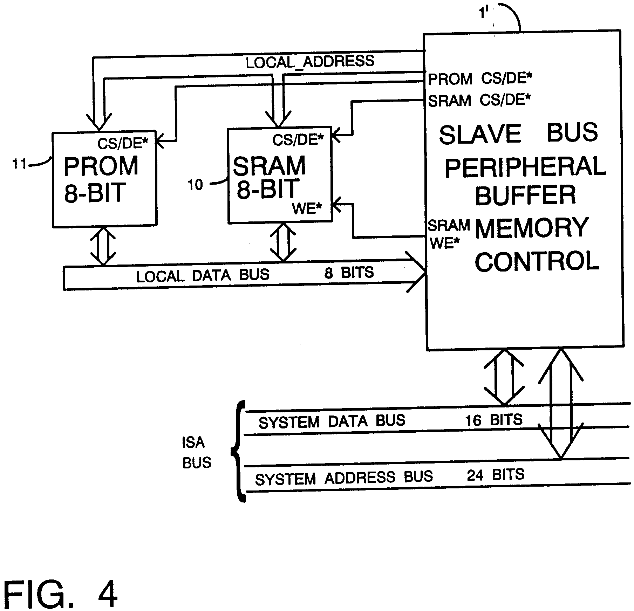

Specifically, as shown in Figure 4, we have modified the local architecture from the prior art by converting the local data bus to 8 bit wide instead of 16 bits wide. This permits use of a single 8 bit wide SRAM chip 10 and PROM chip 11 at a significant savings in hardware cost. The chip select is provided by the decoder in the peripheral control circuit 1' in the same manner as in the prior art. In addition, the peripheral control circuit 1' provides a novel read sequence for managing the 8 bit local bus which is 33% faster than the earlier 16 bit transfer for sequential transfer. Since approximately, 99% of all read transfers are sequential, even though an 8 bit bus transfer rate is inherently slower than a 16 bit transfer, our design results in an overall rate which is faster than the 16 bit bus devices for those applications involving a large number of sequential transfers.

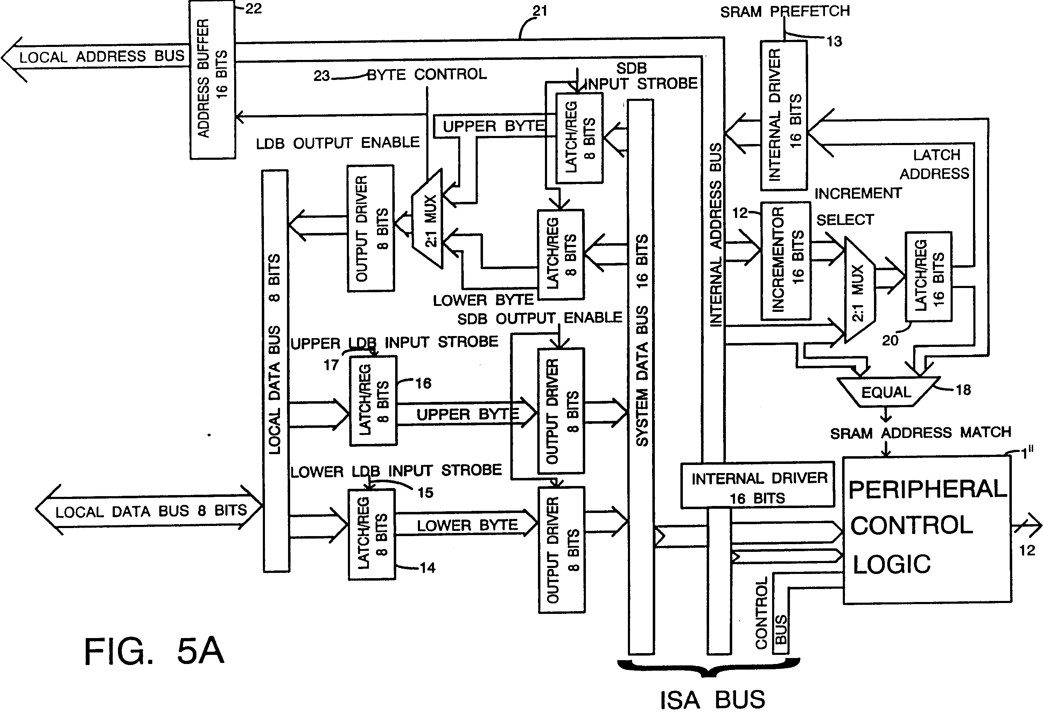

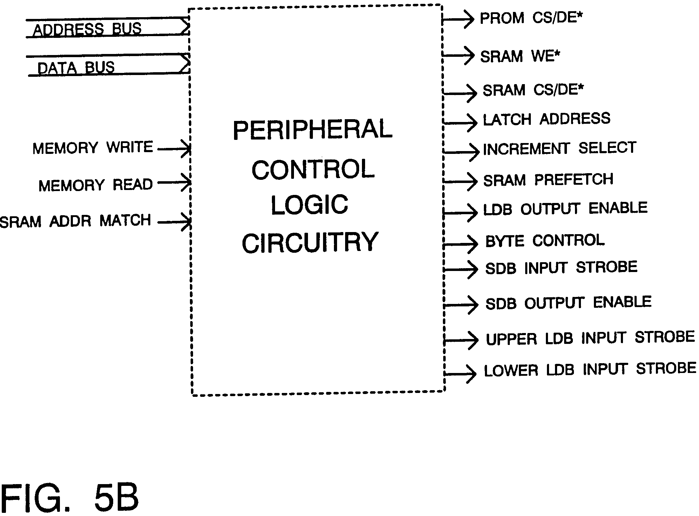

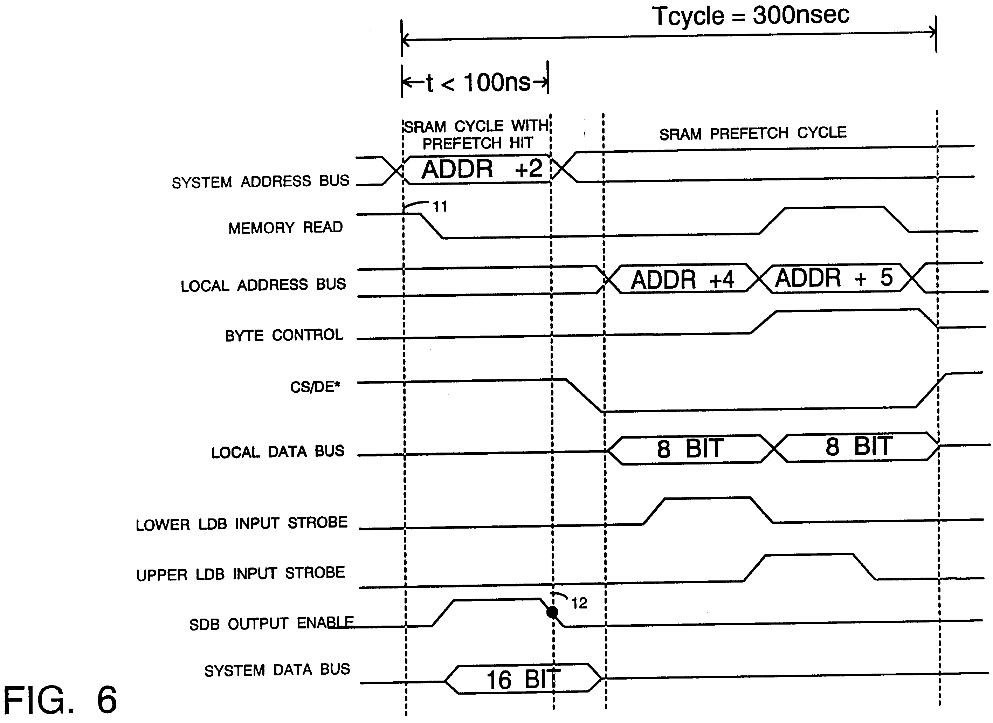

With reference to Fig. 5 and Fig. 6, the timing cycle of Fig. 6 shows that for a sequential read, that the data is available on the data bus at the negative transition of SDB output enable 12 in less than 100 nsec after the request, i.e. the negative transition on the memory read 11. This is possible because the peripheral control circuit 1' prefetched the data from the next address in SRAM 10 memory location. Prefetch means that at the end portion of the previous Read cycle, (after the SRAM data was made available to the system bus) the next address was obtained by incrementation, (Fig.5, 12), followed by activating an SRAM Prefetch signal 13, which provided the next address from latch 20 to the internal address bus 21 to address buffer 22. The first byte of data on the local 8 bit wide bus is then latched into lower byte latch 14 upon issuance of lower LDB input strobe 15 followed by loading of the upper byte latch 16 upon issuance of Upper LDB input strobe 17. The second byte address is provided by Byte Control 23, which is used as the Least Significant Bit (LSB) on the address buffer. This ends the prefetch cycle.

Accordingly, the latches of the peripheral system are ready to immediately make available the data from the next sequential SRAM address if the next read request asks for the data from the prefetched address. As shown with reference to Figure 5a, a match between the new address and the previous incremented address is made on-the-fly with an equality check device 18 and if a match is seen, then the SRAM address match signal is sent to the peripheral logic 1" where it is processed and results in SDB Output Enable which provides a simultaneous 16 bit output transfer of the data which had been earlier latched into the 8 bit latches 14 and 16. (Fig. 5a) to the 16 bit system data bus. After the data is made available, the SRAM prefetch is carried out again as depicted in Figure 6 wherein the SRAM data at the incremented local address is fetched and latched. The transfer time when such sequential transfers are involved is less then the ISA cycle time. Accordingly, in the Read sequential node no wait state is ever imposed by our inventive apparatus.

Peripheral Control Logic Block, 1", Figure 5a, is connected to the ISA Bus and provides all the control signals for memory management described above. Figure 5b is a block diagram showing the inputs to and outputs from the Peripheral Control Logic block circuitry and illustrates that this portion of the Buffer Memory Control 1'outputs 12 different control signals. Standard logic is employed to generate the various timing control signal outputs. These timing control signals are shown in Figure 4 and Figure 5a connected to the-portions of the circuit they control.

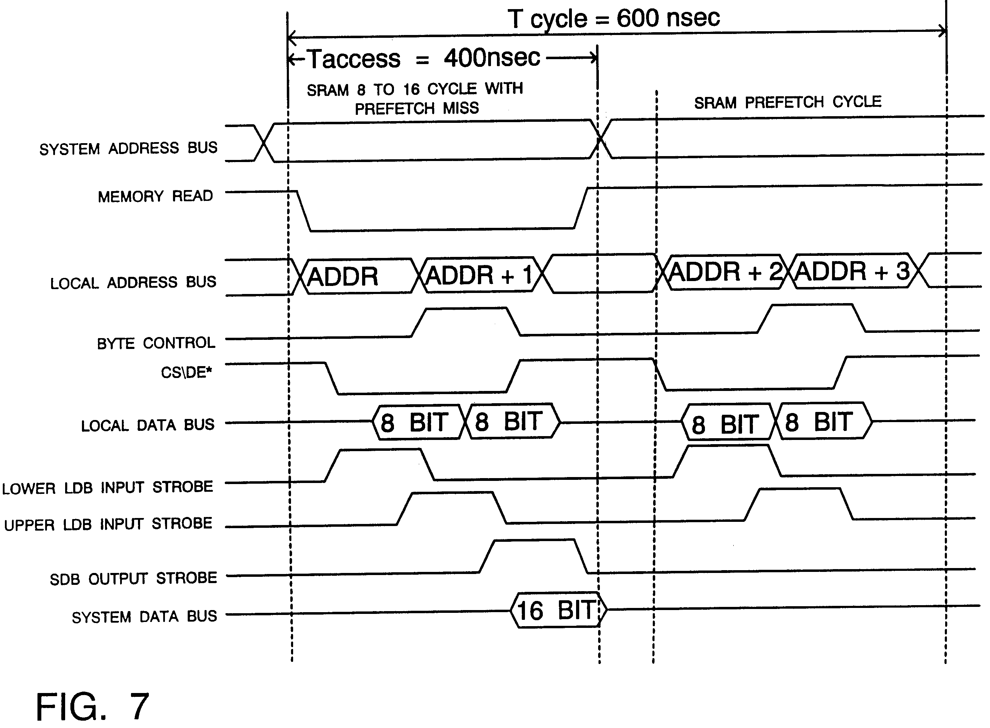

Figure 7 is a timing diagram for the inventive apparatus in the event that the Read is non-sequential and no match is found during the step of comparison of addresses as previously described. The cycle time, T for the Figure 7 condition is longer than the prior art 16 bit read cycle since in this instance, T equals 600 nsec. Access time is 400 nsec which will assert two wait states as opposed to one wait state assertion of the standard 16 bit local bus of Figure 3. However, this is a design trade off, and since the vast majority of the network transfers are sequential, the effect of this fact is not significant in the overall speed of our network controller.

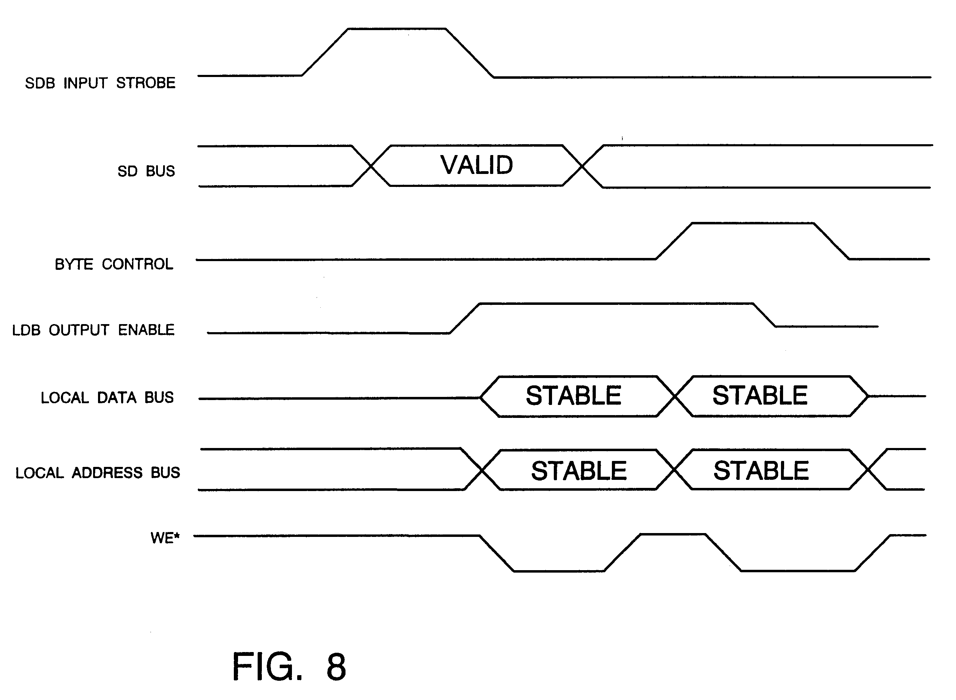

For completeness, the write timing cycle for the 8 bit local data bus is provided in Figure 8. This cycle is also longer than a 16 bit write transfer cycle.

In the write cycle, the SD Bus data is latched without asserting a wait state. The write data is written to memory a short period later after the write command is deasserted. Delaying write will have minimal throughput effect if the peripheral write cycle can be completed before the next write command.

Since the task of a network control buffer is to temporarily store data, the transfer speed of a network buffer is the sum of the average Write + average Read times. Although the average Write time for the 8 bit transfer of the invention is increased from the 16 bit prior art, since the average Read time is decreased by close to the same percentage, the overall speed is as good or better than the prior art, with the advantage that the 8 bit wide data-bus architecture results in hardware which is substantially less expensive to manufacture for the reasons set forth above.

Although the embodiments of this invention are set forth and described with respect to the drawings, it is the intention that the scope of the invention shall be determined by the claims set forth hereinafter.

## Claims

1. Method for using an 8 bit wide buffer memory on an 8 bit wide local bus for high speed Read interfacing with an ISA Bus in the 16 bit wide mode comprising:
performing a local memory read sequence in response to a memory read command from said ISA bus including a memory fetch address on said ISA bus;
matching the said memory fetch address to a predicted next address, which said predicted next address is an incrementation of the next previous memory fetch address derived from said ISA bus;
responsive to indication of a match from said matching step, providing data immediately to said ISA system data bus derived from said predicted next address location, said providing data step being accomplished within the ISA bus specification for minimum access time.

2. The method of claim 1 wherein the step of providing data immediately includes the steps of
enabling a pair of 8 bit output drivers connected to a pair of 8 bit latches, said memory data had been fetched earlier from said predicted next address and loaded into said pair of 8 bit latches.

3. The method of claim 2 wherein the step of performing a local memory read sequence includes, after the step of providing data immediately, the steps of prefetching data from the local memory comprising;
incrementing said next previous memory address by two;
latching said incremented address;
fetching an 8 bit data byte from said incremented address and loading said 8 bit byte into a first 8 bit latch;
incrementing said address by one;
fetching a second 8 bit data byte form said second 8 bit data byte into a second 8 bit latch;

4. Peripheral memory buffer apparatus for interfacing with an ISA bus in the 16 bit mode comprising
an address bus;
means for providing an 8 bit wide local data bus;
RAM, said RAM being organized 8 bit wide and being connected to said 8 bit wide data bus and to said address bus**;**
means to perform a pair of sequential 8 bit wide read fetch accesses from said RAM and to latch the data fetched in each step of said pair of sequential accesses to a first and second separate latch;
means to connect said first latch to a portion of said ISA data bus and said second latch to the remaining portion of said ISA data bus;
means to simultaneous enable said first and second latch to provide a 16 bit output transfer to said ISA bus.

5. The apparatus of claim 4 comprising means to prefetch and load said first and second latch including
means to increment an address stored in a register to a predicted next address;
means to store said predicted next addresses;
means to fetch 8 bit data from said SRAM from said predicted next address and loading said data into said first latch, and
means to increment said predicted next address and to fetch 8 bit data from said SRAM and load said data into said second latch.

6. The apparatus of claim 6 wherein said means to connect said first latch to a portion of said ISA data bus and said second latch to the remaining portion of said ISA bus comprise
a pair of 8 bit output latches in series, one said output latch connected to said first latch and other said output latch connected to said second latch, both said output latches being connected to the same enable signal so that 8 bit data stored in said first latch is made contiguous to the 8 bit data stored in said second latch and output simultaneously to said ISA bus as 16 bit data.
